# FASCICULE DE BREVET EUROPEEN

(11) **EP 1 263 692 B1**
(45) Date de publication et mention de la délivrance du brevet: **19.05.2004**
(21) Numéro de dépôt: 01913993.0
(22) Date de dépôt: 13.03.2001
(51) Int. Cl.: C04B 37/00, B23K 35/30

(54) **PROCEDE D'ASSEMBLAGE DE PIECES EN MATERIAUX A BASE DE CARBURE DE SILICIUM PAR BRASAGE REFRACTAIRE NON REACTIF, COMPOSITION DE BRASURE, ET JOINT ET ASSEMBLAGE REFRACTAIRES**
VERFAHREN ZUR VERBINDUNG VON BAUTEILEN AUF BASIS VON SILICIUMKARBIDMATERIAL MITTELS NICHT REAKTIVER FEUERFESTER HARTLÖTUNG, HARTLOTZUSAMMENSETZUNG, FEUERFESTE VERBINDUNG UND VERBUND
METHOD FOR ASSEMBLING PARTS MADE OF MATERIALS BASED ON SIC BY NON-REACTIVE REFRACTORY BRAZING, BRAZING COMPOSITION, AND JOINT AND ASSEMBLY OBTAINED BY SAID METHOD

(30) Priorité: 14.03.2000 FR 0003240
(43) Date de publication de la demande: 11.12.2002
(73) Titulaire: COMMISSARIAT A L'ENERGIE ATOMIQUE, 75015 Paris Cédex 15 (FR)
(72) Inventeur: GASSE, Adrien, F-38000 Grenoble (FR)
(74) Mandataire: Audier, Philippe André
(86) Numéro de dépôt international: PCT/FR2001/000741
(87) Numéro de publication internationale: WO 2001/068557

(56) Documents cités:
- EP-A- 0 633 093
- EP-A- 0 806 402
- WO-A-86/01446
- WO-A-97/47568
- US-A- 3 813 759
- DATABASE CHEMABS [en ligne] CHEMICAL ABSTRACTS SERVICE, COLUMBUS, OHIO, US; S. MIYATA: "Joining of ceramic parts" retrieved from STN Database accession no. 105:177334 XP002150748 -& JP 61 132570 A (MIYATA GIKEN Y.K., JAPAN) 20 juin 1986 (1986-06-20)

## Description

La présente invention est relative à un procédé d'assemblage de pièces en matériaux à base de carbure de silicium par brasage réfractaire non réactif avec une composition de brasure non réactive à base de silicium et d'un autre élément, afin de réaliser des composants entièrement en carbure de silicium. L'invention a trait, en outre, à certaines compositions de brasure, ainsi qu'au joint et à l'assemblage réfractaires obtenus par ce procédé.

Par matériaux "à base de carbure de silicium", on entend généralement tous les matériaux dont la teneur en SiC est supérieure ou égale à 80 % en poids.

Le domaine technique de l'invention peut être défini comme étant le brasage à haute température, c'est-à-dire qu'il met en oeuvre des températures généralement supérieures à 1 200°C, ce qui permet l'utilisation de l'assemblage obtenu dans des applications nécessitant des montées en température pouvant dépasser par exemple 900°C et jusqu'à 1 600°C et même au-delà.

On sait qu'il est difficile de fabriquer des pièces de grandes dimensions en céramique, en particulier, en SiC. En effet, les tolérances après frittage des composants primaires en carbure de silicium de grandes dimensions sont mal maîtrisées et l'usinage de ces composants est inacceptable pour des raisons de coût.

Par ailleurs, et pour les mêmes raisons, il est généralement difficile de fabriquer des pièces de forme complexe avec des composés à base de silicium tel que le carbure de silicium.

Il est donc souvent préférable de fabriquer les pièces ou structures de grande dimension et/ou de forme complexe à partir d'éléments en céramiques de forme simple et/ou de petite taille, puis d'assembler ces éléments pour réaliser la structure finale.

Une telle technique est notamment nécessaire pour fabriquer des structures du type échangeur de chaleur, brûleurs, résistances thermiques de composants de structure en carbure de silicium ayant une température d'utilisation, par exemple, jusqu'à 1 600°C.

Du fait des températures élevées, voisines par exemple de 1 000°C, mises en oeuvre dans les applications des céramiques telles que le carbure de silicium, l'assemblage de ces céramiques par collage avec des produits organiques est exclu.

D'autre part, les techniques classiques d'assemblage par soudage faisant intervenir un faisceau d'énergie avec ou sans métal d'apport (soudage TIG, électron ou laser) et impliquant une fusion partielle des parties à assembler sont inutilisables pour l'assemblage de céramiques du fait qu'on ne peut pas faire fondre un substrat ou une pièce en céramique, et que, en particulier le carbure de silicium se décompose avant fusion.

En conséquence, le soudage par diffusion en phase solide, l'assemblage-frittage, et le brasage réactif sont actuellement les techniques les plus courantes pour réaliser des assemblages réfractaires de céramiques.

Le soudage par diffusion en phase solide ainsi que l'assemblage-frittage présentent le désavantage d'être contraignants du point de vue de leur mise en oeuvre.

Pour le soudage diffusion en phase solide, la forme des pièces doit rester simple si l'on utilise un pressage uniaxial, ou bien nécessiter un outillage et une préparation complexes comprenant par exemple la fabrication d'une enveloppe, la fermeture étanche sous vide, la compression isostatique à chaud, l'usinage final de l'enveloppe, si l'on utilise la CIC (Compression Isostatique à Chaud).

Dans le cas de l'assemblage-frittage, les mêmes problèmes demeurent (forme des pièces, complexité de mise en oeuvre) avec en plus la nécessité de contrôler le frittage d'une poudre d'apport à intercaler entre les deux matériaux à assembler.

Ces deux techniques nécessitent en outre l'utilisation de paliers de longue durée (une à plusieurs heures) à haute température puisque les processus mis en jeu font intervenir la diffusion à l'état solide.

Le brasage est une technique peu coûteuse, facile de mise en oeuvre, qui est la plus couramment utilisée. Des pièces de forme complexe peuvent être réalisées en faisant du brasage capillaire et les opérations se limitent à placer le métal d'apport ou alliage, appelé « brasure », entre ou à proximité du joint et à faire fondre la brasure pour obtenir, après refroidissement, la jonction des deux pièces.

Le brasage des céramiques doit surmonter le problème fondamental de la mauvaise mouillabilité des céramiques par les métaux liquides. Ce problème est surmonté en sélectionnant des compositions d'alliages particulières et/ou en ajoutant éventuellement un élément réactif, comme c'est le cas du brasage, dit brasage réactif.

Dans cette dernière technique, on utilise une composition d'alliage métallique, le plus souvent à base de cuivre et d'argent et on ajoute un élément réactif tel que Ti, Zr, V, Hf, Nb.....

L'élément réactif agit par décomposition de la surface de la céramique et réaction avec celle-ci pour former un composé très stable de nitrure, oxyde, siliciure ou carbure selon la nature de la céramique en jeu. Cette couche permet généralement un très bon mouillage de la céramique et une adhérence satisfaisante avec celle-ci.

Ainsi le document EP-A-0 135 603 (GTE Products Corporation) décrit-il un alliage ductile pour brasage comprenant de 0,25 % à 4 % d'un métal réactif choisi parmi le titane, le vanadium, le zirconium et leurs mélanges, de 20 à 85 % d'argent, de 1 à 70 % de cuivre ou d'aluminium, et de 3 à 30 % de palladium.

Le document de E. Lugscheider et W. Tillmann "Development of New Active Filler Metal for Joining Silicon Carbide & Nitride" - Babs 6th International Conference - 3-5 Septembre 1991 - Stratford-upon-Avon indique que les céramiques de type non-oxyde tels que Si₃N₄ et SiC peuvent être assemblées entre elles à l'aide de brasures à base de cuivre, d'argent et d'un métal réactif choisi parmi le titane, le zirconium, l'hafnium ou le niobium.

Le document de W. Tillmann et coll. "Herstellungsmöglichkeiten von hochtemperaturbeständigen Verbunden nichtoxidischer Ingenieurkeramiken mittels verschiedener Lotkonzepte" "Brazing-High Température Brazing and Diffusion Welding", Aachen, 27-29 Juin, DVS Verlag GmbH, Düsseldorf, p. 110-114, 1995 décrit des mélanges pour brasage de céramiques non-oxyde à base essentiellement de palladium et de platine avec additions de fer, de nickel ou de cobalt.

Le métal réactif tel que le titane, peut aussi être déposé au préalable sur le carbure de silicium par des techniques telles que le "CVD" (dépôt chimique en phase vapeur) ou le "PVD" (dépôt physique en phase vapeur), comme cela est décrit dans le document de M. Naka et coll : "Ti-precoating Effect on Wetting and Joining of Cu to SiC" ; ISIJ International, Vol. 30 (1990), n° 12, p. 1 108-1 113 relatif à l'assemblage de pièces en SiC par des brasures en cuivre.

Le brasage réactif est adapté à l'assemblage de céramiques oxydes tel que l'alumine, car la réactivité est limitée et le comportement mécanique des oxydes formés satisfaisant.

Dans le cas des céramiques non oxydes telles que le nitrure ou carbure de silicium, la réactivité entre les éléments actifs et la céramique est particulièrement exacerbée ; cette dernière induit la formation de composés intermétalliques fragiles tels que siliciures et carbures dans le cas du SiC, des porosités importantes et des fissures se prolongeant dans la céramique, ce qui limite très sérieusement la résistance mécanique des assemblages ainsi formés.

Ces phénomènes sont mentionnés dans le document de J.K. Boadi, T. Yano, T. Iseki : "Brazing of PressureLess Sintered (PLS) SiC using AgCuTi alloy", J. of Materials Science, Vol. 22, 1987, p. 2 431-2 434 relatif au brasage du SiC obtenu par frittage sans pression ("pressureless-sintered" ou PLS SiC dans les ouvrages en langue anglaise) avec lui-même, à l'aide d'une brasure à base de Ag-Cu avec du titane en tant que métal réactif. On met en particulier en évidence dans ce document la fragilité de l'assemblage à de fortes teneurs en titane ainsi que la formation de composés intermétalliques lorsque la température et le temps de contact augmentent.

Par ailleurs, le point de fusion des brasures précédemment décrites restreint la température d'utilisation à 600-700°C, ce qui est nettement insuffisant pour les applications à haute température voisines de 1 000°C ou plus, par exemple, jusqu'à 1 600°C.

Un autre problème important rencontré lors de l'assemblage de céramiques entre elles est que ces céramiques sont cassantes et pratiquement dépourvues de toute déformabilité, même à de hautes températures.

Il est donc primordial, lors de la réalisation d'un assemblage de céramiques, de limiter les contraintes résiduelles qui se développent lors du refroidissement, dues à un différentiel de coefficient de dilatation entre les deux parties à assembler si leur nature est différente, mais également entre la céramique et la brasure dans le cas d'un assemblage de deux céramiques de même nature. De ce fait, le coefficient de dilatation thermique de la brasure doit correspondre étroitement à celui des pièces en céramique à assembler.

Les compositions d'alliage couramment utilisées à base de Cu et d'Ag sont ductiles, mais de température d'utilisation limitée, comme nous l'avons indiqué précédemment et n'apportent donc pas une réponse satisfaisante à ce problème.

C'est notamment pour apporter une solution à ce problème et permettre la réalisation d'assemblages satisfaisant avec des céramiques contenant du silicium qu'ont été développées des brasures avec des siliciures métalliques.

Ainsi, le document US-A-4 499 360 (DORNIER SYSTEM GmbH) qui correspond aux documents de brevet DE-A-3 230 320 ; JP-A-59(84)09 7580 et au brevet EP-A-0 100 835 décrit-il une brasure pour l'assemblage de pièces à base de SiC constituée de 20 à 45 % en poids de cobalt et de 80 à 55 % en poids de silicium. Bien que ce document fasse mention d'un brasage réfractaire du carbure de silicium en général, il est fondamentalement question dans ce brevet du brasage de pièces en carbure de silicium imprégné ou en carbure de silicium "reaction bound" (RBSC = Reaction Bonded Silicon Carbide, en français : carbure de silicium fritté réaction, ou bien Si-SiC), c'est-à-dire en une céramique composite constituée par du carbure de silicium (SiC) et jusqu'à 30 % en poids de silicium (Si). Le procédé de ce document est par exemple mis en oeuvre pour assembler deux tubes en SiSiC. L'épaisseur du joint obtenu est chaque fois d'une épaisseur faible de 5 à 10 microns.

La formulation de brasure, proposée par ce document, ne permet pas de satisfaire aux exigences requises pour réaliser des joints très réfractaires.

En effet, les compositions de brasure, décrites dans ce document, sont adaptées à du Si - SiC avec des températures de brasage inférieures à 1 400°C.

Or, il a été démontré dans le brevet WO-A-97/47568 que, pour que le coefficient de dilatation de la brasure soit adapté à celui du SiC avec le système Co - Si, il fallait que la proportion de Si dans la brasure, dont le coefficient de dilatation est proche du SiC (α_{Si} 5.10⁻⁶ K⁻¹) soit supérieur ou égale à 80 % en poids. La brasure intermétallique, décrite dans ce document, comprend donc de 1 à 18 % en poids de cobalt et de 82 à 99 % en poids de silicium et permet notamment de réaliser des joints épais, mais elle limite encore l'utilisation à une température inférieure à 1 400°C. De plus, la fragilité connue de ces siliciures les rend particulièrement sensibles à la propagation de fissures lors de sollicitations mécaniques en fonctionnement.

Le document US-A-3 813 759 est relatif à l'assemblage entre elles de céramiques à base de carbure de silicium à l'aide de brasures consistant en un alliage de silicium (au moins 5 %) avec un ou plusieurs métaux tels que le germanium, le fer, l'or, le platine, le nickel, le palladium, le chrome et le titane.

Dans ce document, on retrouve, en fait, sensiblement les mêmes limitations que dans le document US-A-4 499 360, déjà cité plus haut. En effet, la composition de brasure a une température de fusion qui ne doit pas excéder 1 400°C et elle sert à assembler uniquement des pièces en Si SiC dont la température de fonctionnement est inférieure à 1 400°C. Par ailleurs, les durées de brasage, c'est-à-dire les temps de maintient des pièces et de la brasure dans les conditions du brasage doivent obligatoirement être supérieures à 1 heure ; dans les exemples, des durées de brasage extrêmement longues, atteignant jusqu'à 16 heures, sont mentionnées.

En outre, l'expérience des inventeurs avec ces alliages a montré que pour que le coefficient de dilatation de ces alliages soit adapté au SiC, il fallait que la teneur en silicium soit très élevée. Cela est confirmé par les revendications 1, 6 et 7 de ce document, dans lesquelles les composites, décrites dans les systèmes Cr - Si et Ti - Si à forte teneur en Si correspondant à des caractéristiques de dilatation, ont des teneurs respectives en Si de 75 et 78 % en poids. Ce document décrit donc des compositions de brasure très spécifiques, ponctuelles, dont le coefficient intrinsèque est uniquement adapté au SiC particulier à braser. De ce fait, le procédé de ce document est d'adaptation très limitée. En outre, les joints obtenus sont sujets à des fissurations consécutives aux contraintes thermomécaniques résiduelles subies lors de leur élaboration et leur ténacité laisse à désirer.

Les mêmes remarques sont valables pour le document WO-A-86/01446 qui décrit des compositions de brasure parmi lesquelles seules les compositions de brasure spécifiques Si - SNb, Si - 30Nb et Si - 30Ta sont testées quant à leur mouillabilité sur le SiC, aucun assemblage n'est préparé.

Malgré la forte réactivité du carbure de silicium avec les métaux de transition, les siliciures métalliques mentionnés ci-dessus présentent l'avantage d'être non-réactifs vis-à-vis du carbure de silicium quand la composition est suffisamment riche en silicium. Par ailleurs, ces siliciures possèdent une bonne tenue à l'oxydation sous air à haute température.

Cependant, l'emploi de ces siliciures doit être utilisé avec une bonne connaissance préalable des interfaces entre les siliciures et le SiC. En effet, si des alliages du type Co-Si, Ni-Si par exemple possèdent la propriété de former une interface forte avec le SiC, ce n'est pas le cas du tout du système Fe-Si par exemple, comme cela est décrit dans le document de S. Kalogeropoulou, L. Baud, N. Eustathopoulos : "Relationship between wettability and reactivity in Fe/SiC system" ; Acta metall. Mater., vol. 43, 907, (1995), qui met en évidence les faits que le Fe réagit fortement avec le carbure de silicium, que des additions de Si dans le fer conduisent à une forte réduction de la réactivité si la teneur en Si dépasse une valeur dite critique et que l'adhérence n'est pas satisfaisante.

Il apparaît donc que la formulation d'une composition de brasure à base de siliciure métallique est relativement imprévisible et que ses propriétés ne peuvent absolument pas se déduire des propriétés des brasures connues.

De plus, comme il l'a été mentionné précédemment, le coefficient de la brasure doit être adapté à celui de la céramique telle que le SiC, puisque ces siliciures métalliques, qui sont des composés définis, n'ont aucune ductilité.

Le document US-A-5 447 683 (GENERAL ATOMICS) décrit des joints pour l'assemblage par brasage à haute température de blocs de céramique dense en carbure de silicium. Les brasures selon ce document ont un coefficient de dilatation thermique compatible avec celui du carbure de silicium et comprennent du silicium en une proportion impérativement inférieure à 50 % en poids et au moins deux autres éléments choisis parmi Li, Be, B, Na, Mg, P, Sc, Tc, V, Cr, Mn, Fe, Co, Zn, Ga, Ge, As, Rb, Y, Sb, Te, Cs, Pr, Nd, Ta, N et Tl ; Fe, V, Co, Cr étant préférés. Une brasure particulièrement préférée contient de 10 à 45 % Si et de 30 à 65 % Co.

La proportion de Si inférieure à 50 % en poids est nettement insuffisante pour contrôler la réactivité des alliages, mentionnés dans ce document, avec le SiC. Par ailleurs, la présence importante des éléments, cités plus haut, augmente considérablement le coefficient de dilatation de la brasure.

L'expérience des inventeurs, avec ce type d'alliage, a montré que de tels alliages ne sont pas adaptés au brasage réfractaire du SiC, aussi bien pour des raisons de compatibilité chimique : ces alliages sont trop réactifs car à trop faible teneur en silicium, que mécanique : leur coefficient de dilatation est trop élevé. De plus, les assemblages mentionnés ne sont pas assez réfractaires (1 200 à 1 500°C) et contiennent nécessairement, outre le Si, au moins deux métaux.

Le document FR-A-2 707 196 (CEA) décrit un procédé d'assemblage de molybdène ou de tungstène avec eux-mêmes ou avec des céramiques telles que du carbure de silicium, par brasage.

La brasure utilisée comprend de 39 à 98 % en poids de silicium et les brasures mises en oeuvre dans les exemples comprennent 49 et 62 % en poids de silicium.

Ce document ne concerne que des assemblages hétérogènes de type céramique/métal et n'aborde pas les problèmes spécifiques des assemblages homogènes de deux céramiques de même nature telles que du SiC, ainsi que de la réalisation de joints épais.

Le document US-A-5 340 658 mentionne l'utilisation de brasures comportant divers éléments dont du silicium pour assembler des composites carbone-carbone. Ces alliages sont réactifs, et peu réfractaires, c'est-à-dire qu'ils ont des températures de fusion inférieures à 1 000°C. On se situe donc en dehors du domaine de l'invention.

Le document US-A-5 021 107 est relatif à un procédé pour assembler, ou revêtir, des pièces en composite carbone-carbone, dans lequel on utilise un matériau d'interface ayant une température de fusion supérieure à 2 500°F (1 370°C), qui est pris en sandwich entre les deux surfaces à assembler. L'assemblage est maintenu par compression et on le chauffe à une température suffisante pour faire fondre le matériau d'interface ou pour provoquer une diffusion entre le matériau d'interface et le matériau composite carbone-carbone.

Parmi les matériaux d'interface, sont cités divers métaux, tels que Ti, Zr, Mo et Si, B, Nb, W, Ni, Cr, V, Ti et leurs carbures, par exemple, SiC.

Ces composés peuvent être très réfractaires, c'est-à-dire que la température de brasage peut aller jusqu'à environ 2 000°C, mais ils sont aussi très réactifs avec les composites carbone-carbone. Ce document est en dehors du domaine de l'invention, puisqu'il concerne les composites carbone-carbone et non les matériaux à base de SiC.

Le document EP-A-0 342 545 a trait à une brasure en forme de feuille, d'une épaisseur de 20 à 120 µm, avec une structure au moins partiellement amorphe constituée d'un alliage dont la composition en pourcentages atomiques est de 20 à 50 % de fer, de 5 à 20 % de chrome, de 10 à 30 % de nickel, de 5 à 20 % de bore et de 0 à 30 % de carbure de silicium. Cette brasure peut servir, en particulier, à l'assemblage réfractaire de pièces en carbure de silicium entre elles ou avec des métaux, tels que le nickel, le fer et le titane.

Les températures de brasage vont de 900 à 1 300°C au maximum et les alliages utilisés sont réactifs avec le carbure de silicium.

Le document RU-A-20 112 466 mentionne l'utilisation pour l'assemblage de pièces en SiC, d'une brasure contenant les trois éléments Cr, Ce et Si dans les proportions suivantes en pourcentages en poids : Cr 21 à 24 %, Ce 3 à 7 % et le reste de Si. La température de brasage est comprise entre 1 360 et 1 400°C.

Le document RU-A-2 012 467 mentionne l'utilisation, pour l'assemblage de pièces en SiC, d'une brasure contenant les trois éléments Ti, Ce et Si, dans les proportions suivantes en pourcentages en poids : Ti 18 à 22 %, Ce 3 à 7 % et le reste de Si. La température de brasage est comprise entre 1 360°C et 1 400°C.

On a vu plus haut que, comme pour toutes les céramiques techniques, il est difficile de fabriquer des pièces de forme complexe en carbure de silicium, il est donc souvent nécessaire de fabriquer des structures à partir d'éléments en céramique de forme simple, puis de les assembler pour réaliser la structure finale.

Par ailleurs, la fabrication de pièces céramiques techniques avec des cotes précises demeure toujours très mal maîtrisée et l'usinage de telles pièces est inacceptable, en particulier pour des raisons de coût.

Il existe donc actuellement un besoin pour un procédé qui permette de réaliser, par brasage, entre deux céramiques de même nature, telle que le SiC, des liaisons fortes, mais aussi très réfractaires, c'est-à-dire pouvant notamment résister à des températures pouvant aller jusqu'à 1 600°C et même au-delà.

Aucun des procédés de brasage et des compositions de brasure décrits dans les documents de l'art antérieur ne répond à ce besoin.

En particulier, aucun des procédés et des compositions de l'art antérieur ne remplit simultanément les critères suivants, mis en évidence par les inventeurs, et qui sont fondamentaux pour réaliser des composants de structure en céramique, telle que du SiC impliquant des joints, en particulier des joints épais, très réfractaires.
- 1. La composition de brasure doit permettre de réaliser une liaison forte entre les deux pièces en céramique telle que du carbure de silicium, ce qui implique une composition de brasure non réactive, c'est-à-dire chimiquement compatible avec le carbure de silicium.
- 2. La composition de brasure doit bien mouiller le carbure de silicium et bien adhérer à celui-ci.
- 3. La composition de brasure doit avoir un coefficient de dilatation adapté au SiC, c'est-à-dire proche du coefficient de dilatation, de celui-ci pour supprimer toute contrainte résiduelle qui pourrait apparaître au sein du joint lors du refroidissement et garantir qu'il n'y ait pas d'amorce de fissures, ce qui serait dommageable à la tenue mécanique de l'assemblage.
- 4. La composition de brasure doit être constituée d'un nombre limité d'éléments, afin de faciliter sa préparation et sa mise en oeuvre.
- 5. Enfin, le joint doit être très réfractaire, c'est-à-dire avec une température de brasage très élevée, par exemple, de 1 250 à 1 850°C leur permettant de résister à des températures d'usage de 1 600°C et plus.

En outre, le procédé doit permettre le brasage, l'assemblage de tout type de céramique et doit pouvoir facilement s'adapter à toute céramique spécifique à base de carbure de silicium.

Le but de l'invention est donc de fournir un procédé d'assemblage par brasage de pièces ou composants en matériaux à base de carbure de silicium qui réponde, entre autres, aux besoins cités plus haut, qui satisfait, entre autres, l'ensemble des exigences et critères mentionnés ci-dessus, qui élimine les inconvénients, défauts, limitations rencontrés avec les procédés de l'art antérieur, et qui permette de réaliser des joints très réfractaires, à ténacité élevée et exempts de fissuration aussi bien lors de l'élaboration du joint que dans les conditions du fonctionnement.

Ce but, et d'autres encore, sont atteints selon l'invention par un procédé d'assemblage d'au moins deux pièces en matériaux à base de carbure de silicium par brasage réfractaire non réactif, dans lequel on met en contact ces pièces avec une composition de brasure non réactive et on chauffe l'ensemble formé par les pièces et la composition de brasure à une température de brasage suffisante pour faire fondre la composition de brasure afin de former un joint réfractaire, dans lequel la composition de brasure non réactive est constituée, en pourcentages atomiques, de 40 à 97 % de silicium et de 60 à 3 % d'un autre élément choisi parmi le chrome, le rhénium, le vanadium, le ruthénium, l'iridium, le rhodium, le palladium, le cobalt, le platine, le cérium et le zirconium et dans lequel, préalablement au brasage, on effectue un ajout d'un renfort de SiC et/ou de C.

Le procédé selon l'invention, répond aux besoins, satisfait à l'ensemble des exigences et des critères, mentionnés ci-dessus, et ne présente pas les inconvénients des procédés de l'art antérieur et permet ainsi de préparer des joints très réfractaires.

Les inventeurs ont mis en évidence, de manière surprenante, que pour les critères mentionnés ci-dessus soient remplis, et en particulier pour que la composition de brasure, tout en étant très réfractaire, ne soit pas réactive avec le SiC, on devait se placer dans le domaine spécifique de pourcentages atomiques, mentionné ci-dessus.

Les siliciures spécifiques très réfractaires mis en oeuvre dans le procédé de l'invention ont, en général, un coefficient de dilatation plus élevé que le SiC, et leur domaine de composition non réactif n'était absolument pas prévisible à priori.

Ces siliciures sont simples, puisque ce sont des siliciures binaires et non tertiaires, voire plus complexes, comme ceux utilisés dans de nombreux documents de l'art antérieur. Leur préparation est donc plus facile.

Le domaine de composition de brasure selon l'invention permettant de réaliser des joints très réfractaires entre deux pièces de céramique de même nature en SiC n'est ni mentionné ni suggéré dans l'art antérieur décrit plus haut.

Le procédé selon l'invention présente l'avantage de conduire à des assemblages très réfractaires pouvant résister à de hautes températures pouvant aller sous air jusqu'à 1 600°C ou au-delà car la température de brasage est également de 950 à 1 850°C, et la température de fusion des compositions (solidus) varie généralement de 900 à 1 820°C.

Selon l'invention, les compositions de brasure mises en oeuvre doivent généralement avoir une teneur en silicium supérieure ou égale à 40 % en atome pour être non réactives avec le SiC.

Pour que le coefficient de dilatation de la brasure soit proche, mais supérieur, à celui du carbure de silicium, le pourcentage de silicium doit, de préférence, ne pas excéder 97 % atomique.

Un procédé mettant en oeuvre les compositions de brasure dont les pourcentages atomiques sont situées dans la plage mentionnée plus haut est d'une mise en oeuvre simple, car ces compositions sont non réactives, à l'échelle submicronique et possèdent de très bonnes propriétés de mouillabilité et d'adhérence sur le SiC. La composition de brasure, en elle-même, est peu chère car elle ne contient que des éléments d'un faible coût.

Tous les joints obtenus par le procédé de l'invention ont une très bonne résistance mécanique définie, par exemple, par une σᵣ très élevée, et, lors d'un test mécanique, la rupture a toujours lieu dans un des substrats de SiC, mais jamais dans le joint lui-même.

Etant donné le caractère non réactif de la composition de brasure de l'invention, il est possible de dissoudre la brasure si nécessaire et de procéder de nouveau à un brasage. Puisqu'il n'y a pas de réaction de la brasure sur le SiC, un rebrasage tel qu'une réparation est possible.

Outre la mise en oeuvre d'une composition de brasure spécifique, non réactive, la seconde caractéristique essentielle du procédé de l'invention est l'ajout d'un renfort de SiC et/ou de C préalablement au brasage.

Il est tout d'abord à noter que l'utilisation d'un tel renfort, qui plus est en conjonction avec une composition de brasure non réactive n'est ni divulguée, ni suggérée dans l'art antérieur. L'ajout d'un renfort de SiC et/ou de C permet d'adapter parfaitement le coefficient de la composition de joint incluant le renfort plus la brasure au matériau à base de SiC. Il est possible, grâce au procédé de l'invention, de braser tous les matériaux à base de SiC connus, ce qui n'est pas le cas des procédés de l'art antérieur, ainsi le procédé selon l'invention permet-il, par exemple, de braser les céramiques et composites à base de SiC. Au contraire de la démarche suivie dans l'art antérieur, les compositions de brasure, mises en oeuvre dans le procédé selon l'invention, ont généralement un coefficient de dilatation intrinsèque qui n'est pas adapté au matériau à base de SiC et c'est précisément l'ajout d'un renfort de SiC et/ou de C qui permet d'adapter la dilatation globale du joint à celle du matériau à base de SiC à assembler. Ainsi, il est possible d'utiliser non pas des compositions ponctuelles, comme dans le document US-A-3 813 759, ou le document WO-A-86/01446 mais une large gamme de compositions avec, notamment, la plupart des compositions dont le point de fusion est supérieur à 1 400°C.

Le renfort, en adaptant exactement la dilatation, permet non seulement de supprimer toute fissuration possible consécutive aux contraintes thermomécaniques résiduelles lors de l'élaboration des joints, mais également d'obtenir un joint composite dont la ténacité est renforcée et est extrêmement élevée.

En d'autres termes, d'une part, les compositions de brasure non réactives, mises en oeuvre dans le procédé selon l'invention, assurent une excellente compatibilité chimique avec le matériau à base de SiC, le mouillent bien et adhèrent bien à celui-ci ; d'autre part, afin de limiter les contraintes résiduelles, qui apparaissent lors du refroidissement, suite à la différence de coefficient de dilatation entre le matériau et la brasure, la composition globale dans le joint inclut, selon l'invention, un alliage métal-silicium et un renfort de SiC et/ou de C, dont le coefficient de dilatation est proche de celui du matériau à base de SiC. Ceci est d'autant plus vrai que l'épaisseur du joint est importante, ou que la sollicitation mécanique est importante. Grâce au procédé selon l'invention, ou évite toute fissuration induite soit lors de l'élaboration du joint, soit lors d'un fonctionnement en service de l'assemblage, qui serait très dommageable à la durée de vie de la pièce ou composant.

En plus des avantages, déjà mentionnés plus haut, on peut indiquer que la composition de brasure mise en oeuvre dans l'invention est un siliciure dont la teneur élevée en Si renforce sa résistance à l'oxydation par formation d'une couche de silice superficielle.

La brasure mise en oeuvre selon l'invention a également ainsi l'avantage d'être peu sensible à la corrosion, par exemple par l'oléum, l'acide nitrique et à l'oxydation.

En outre, contrairement aux brasures réactives classiques, la qualité de l'atmosphère du four de brasage est moins critique, ainsi le mouillage est immédiat et ceci même avec des atmosphères ayant une pression partielle d'oxygène non négligeable, comme par exemple, avec de l'argon de qualité commerciale, ainsi le brasage peut il être réalisé sous vide ou sous simple protection de gaz neutre, mais également en utilisant des gaz réducteurs, tels que l'hydrogène.

Comme autres avantages du procédé de l'invention, on peut également citer :
- des durées de brasage courtes, par exemple, de 5 à 15 minutes seulement, au contraire de la diffusion en phase solide, qui nécessite des durées beaucoup plus longues. De plus, le paramètre de la durée de brasage n'est plus critique, et si nécessaire, par exemple, dans le cas du brasage de pièces de grandes dimensions, d'une inertie thermique au four, le temps de brasage pourra être facilement allongé ou adapté ;
- une grande simplicité induisant de faibles coûts globaux du procédé.

Les compositions de brasure préférées dans le procédé selon l'invention sont les suivantes :
- 50 à 97 at % de silicium, 50 à 3 at % de chrome, ce qui correspond pour ces compositions en quantités massiques à 34 à 94,5 % en poids de silicium et 66 à 5,5 % en poids de chrome, la température de brasage de ces compositions est généralement de plus de 1 400°C jusqu'à 1 550°C ;
- 40 à 97 at % de silicium et 60 à 3 at % de rhénium, ce qui correspond pour ces compositions en quantités massiques à 9 à 82,5 % en poids de Si à 91 à 17,5 % en poids de rhénium ;
- 55 à 97 at % de silicium, 45 à 3 at % de vanadium, ce qui correspond pour ces compositions en quantités massiques à 40 à 95 % en poids de silicium et 60 à 5 % en poids de vanadium ;
- 60 à 97 at % de silicium et 40 à 3 at % de zirconium, ce qui correspond pour ces compositions en quantités massiques à 31 à 95 % en poids de silicium et 69 à 5 % en poids de zirconium ;
- 45 à 97 at % de silicium et 55 à 3 at % de ruthénium, ce qui correspond pour ces compositions en quantités massiques à 20 à 90 % en poids de silicium et 80 à 10 % en poids de ruthénium ;
- 48 à 97 at % de silicium, 52 à 3 at % d'iridium, ce qui correspond pour ces compositions en quantités massiques à 12 à 82,5 % en poids de silicium et 88 à 17,5 % en poids d'iridium ;
- 50 à 97 at % de sicilium, 50 à 3 at % de rhodium, ce qui correspond pour ces compositions en quantités massiques à 21,5 à 90 % en poids de silicium et 78,5 à 10 % en poids de rhodium ;
- 50 à 97 at % de silicium, 50 à 3 at % de palladium, ce qui correspond pour ces compositions en quantités massiques à 21 à 89,5 % en poids de silicium et 21 à 10,5 % en poids de palladium ;
- 58 à 97 at % de silicium, 42 à 3 at % de cobalt, ce qui correspond pour ces compositions en quantités massiques à 40 à 95 % en poids de silicium et 60 à 5 % en poids de cobalt ;
- 50 à 97 at % de silicium, 50 à 3 at % de platine, ce qui correspond pour ces compositions en quantités massiques à 12,5 à 82 % en poids de silicium et 87,5 % à 18 % en poids de platine ;
- 53 à 97 at % de silicium et 47 à 3 at % de cérium, ce qui correspond pour ces compositions en quantités massiques à 18 à 90 % en poids de silicium et 82 à 10 % en poids de cérium.

Le procédé selon l'invention est, généralement, réalisé en formant une poudre de la composition de brasure, en mettant en suspension cette poudre dans un liant organique, et en enduisant les parties des pièces à assembler avec la suspension obtenue, et en effectuant un ajout d'un renfort de SiC et/ou de C, préalablement au brasage.

La composition de brasure peut être appliquée entre et/ou à proximité des pièces à assembler.

L'ajout de SiC et/ou de C a pour but, comme on l'a indiqué plus haut, notamment, d'augmenter la ténacité de l'assemblage et d'adapter le coefficient de dilatation de la brasure à celui du SiC à assembler, généralement en diminuant le coefficient de dilatation de la brasure. Cet ajout de SiC et/ou de C est, généralement, réalisé en une quantité de 5 à 60 % en poids de SiC et/ou de C par rapport au poids de la composition de brasure (c'est-à-dire de l'ensemble Si + métal) décrite ci-dessus.

On notera que plus la proportion de Si est faible dans la brasure, plus la proportion du renfort doit être importante (celle-ci dépend du coefficient de dilatation du siliciure) pour compenser l'augmentation du coefficient de dilatation liée au métal. Ainsi, selon le coefficient de dilatation des différents alliages Si et métal, il est nécessaire d'avoir une proportion de renfort plus ou moins importante, avec généralement un minimum de 5 % en poids.

Cet ajout d'un renfort de SiC et/ou de C peut se faire de différentes façons, en ajoutant le renfort de SiC et/ou de C à la composition de brasure, préalablement au brasage, ou en plaçant le renfort à proximité et/ou sur et/ou entre les pièces à assembler. De préférence, la brasure (Si + métal) est placée à l'extérieur du joint formé par les surfaces mises en contact et à proximité du joint, et le renfort est placé entre les pièces à assembler. Le renfort peut se présenter sous toute forme convenable choisie parmi : poudre, grains, morceaux et particules de diverses formes, tissu, non-tissé, feutre, mousse, etc.

Ainsi, plus précisément :
- on peut mélanger directement de la poudre de SiC et/ou de C à la composition de brasure ;
- on peut mettre la poudre de SiC et/ou de C en suspension dans un liant organique et enduire les pièces à assembler avec la suspension obtenue ;
- on peut ajouter des particules de SiC et/ou de C dans la composition de brasure ;
- on peut enfin intercaler le renfort, par exemple sous la forme d'un tissu, d'un non-tissé, d'un feutre ou d'une mousse de carbure de silicium et/ou de carbone entre les pièces à assembler.

L'ajout de SiC et/ou de C permet d'obtenir des joints de ténacité élevée du fait de la présence de particules de SiC et/ou de C ou d'un tissu de SiC et/ou de C dans le joint.

Pour différencier les particules de la poudre, on peut indiquer que la granulométrie de cette dernière est plus faible.

L'invention concerne aussi une composition pour le brasage réfractaire nop réactif de pièces en matériaux à base de carbure de silicium comprenant un ajout d'un renfort de SiC et/ou de C et une composition de brasure non réactive, choisie parmi :
- une composition de brasure constituée, en pourcentages atomiques, de 40 à 97 % de silicium et de 60 à 3 % de rhénium ;
- une composition de brasure constituée, en pourcentages atomiques, de 45 à 97 % de silicium et de 55 à 3 % de ruthénium ;
- une composition de brasure constituée, en pourcentages atomiques, de 48 à 97 % de silicium et de 52 à 3 % d'iridium ;
- une composition de brasure constituée, en pourcentages atomiques, de 50 à 97 % de silicium et de 50 à 3 % de palladium ;
- une composition de brasure constituée, en pourcentages atomiques, de 50 à 97 % de silicium et de 50 à 3 % de platine ;
- une composition de brasure constituée, en pourcentages atomiques, de 53 à 97 % de silicium et de 47 à 3 % de cérium;
ou une composition choisie parmi les compositions suivantes :
- une composition de brasure constituée, en pourcentages atomiques, de 50 à 97 % de silicium et de 50 à 3 % de chrome ;
- une composition de brasure constituée, en pourcentages atomiques, de 55 à 97 % de silicium et de 45 à 3 % de vanadium ;
- une composition de brasure constituée, en pourcentages atomiques, de 60 à 97 % de silicium et de 40 à 3 % de zirconium ;
- une composition de brasure constituée, en pourcentages atomiques, de 50 à 97 % de silicium et de 50 à 3 % de rhodium ;
- une composition de brasure constituée, en pourcentages atomiques, de 58 à 97 % de silicium et de 42 à 3 % de cobalt.

L'invention concerne, en outre, le joint réfractaire, et l'assemblage comprenant au moins deux pièces en matériaux à base de SiC, obtenus par le procédé décrit ci-dessus.

D'autres caractéristiques et avantages de l'invention ressortiront mieux à la lecture de la description qui va suivre, donnée à titre illustratif et non limitatif.

Le procédé de l'invention consiste, tout d'abord, à préparer une composition de brasure contenant du silicium et, du chrome, du rhénium, du vanadium, du zirconium, du ruthénium, de l'iridium, du rhodium, du palladium, du cobalt, du platine ou du cérium, dans les proportions voulues indiquées ci-dessus.

La composition de brasure est, généralement, une composition pulvérulente qui peut être préparée, par exemple, en synthétisant, tout d'abord, à partir des éléments purs un composé intermétallique contenant du silicium et du chrome, du rhénium, du vanadium, du zirconium, du ruthénium, de l'iridium, du rhodium, du palladium, du cobalt, du platine ou du cérium.

La synthèse d'une telle composition intermétallique se fait, par exemple, en introduisant le silicium - par exemple, sous la forme de morceaux - et le chrome, le rhénium, le vanadium, le zirconium, le ruthénium, l'iridium, le rhodium, le palladium, le cobalt, le platine ou le cérium - par exemple, sous la forme de fil, de morceaux, ou autres - dans un creuset réfractaire en alumine, par exemple, en chauffant, par exemple, à une température de 1 250 à 1 850°C, pour faire fondre les différents constituants de ladite composition et obtenir le composé intermétallique final désiré, homogène. Le composé intermétallique obtenu est ensuite broyé dans tout appareil adéquat, par exemple, dans un mortier pour obtenir une poudre de granulométrie adéquate, c'est-à-dire, que les grains ont, par exemple, un diamètre de 1 à 250 µm.

Au lieu d'être synthétisé, ledit composé intermétallique peut également être un composé du commerce se présentant sous la forme d'une poudre de composé intermétallique de granulométrie et de pureté connues. Parmi ces poudres du commerce, on peut citer, par exemple : la poudre du composé CrSi₂ de marque CERAC®, de pureté 99,5 % et de granulométrie inférieure à 10 µm ; la poudre du composé VSi₂, de marque CERAC®, de pureté 99,5 % et la granulométrie inférieure à 45 µm ; la poudre du composé ZrSi₂, de marque CERAC®, de pureté 99,5 %, et de granulométrie inférieure à 45 µm ; la poudre du composé CeSi₂, de marque CERAC®, de pureté 99,5 %, et de granulométrie inférieure à 10 µm ; et la poudre de composition Re₅Si₃, de marque GOODFELLOW®, de pureté 99,5 %, et de granulométrie inférieure à 40 µm. Cette poudre constituée de deux composés intermétalliques peut être utilisée en tant que telle comme composition de brasure.

Mais, afin d'ajuster la teneur en Si de la composition de brasure, il peut être nécessaire de mélanger une des poudres de composé intermétallique mentionnées ci-dessus avec de la poudre de silicium pur. Cette poudre de silicium pur peut être préparée à partir de morceaux de silicium pur broyé dans tout appareil adéquat, par exemple, dans un mortier, pour obtenir une poudre de granulométrie adéquate dont les grains ont, par exemple, un diamètre de 1 à 250 µm.

Au lieu d'être ainsi préparée, ladite poudre de silicium pur peut également être une poudre du commerce de granulométrie et de pureté connues. Parmi ces poudres du commerce, on peut citer, par exemple : la poudre de Si pur, de marque CERAC®, de pureté de 99,5 % ou 99,99 % et de granulométrie inférieure à 10 µm.

La poudre composée du mélange des poudres de composé intermétallique et de Si constitue, dans ce cas, la composition de brasure.

Selon l'invention, on effectue, en outre, un ajout d'un renfort de SiC et/ou de C préalablement au brasage. On peut réaliser, comme on l'a indiqué plus haut, cet ajout d'un renfort de SiC et/ou de C de différentes façons.

Par exemple, du fait que la composition de brasure présente un coefficient de dilatation élevée, on rajoute à celle-ci de la poudre de SiC et/ou de C, afin, notamment, de diminuer le coefficient de dilatation et d'ajuster la ténacité de l'assemblage, c'est en particulier le cas lorsque la teneur en Si de la composition de brasure n'est pas suffisamment importante pour que le coefficient de dilatation de la brasure soit adapté à celui du SiC des pièces à assembler. Le SiC et/ou le C ajouté représente, généralement, de 5 à 60 % en poids de la composition de brasure. La poudre de SiC peut être, par exemple, une poudre commerciale, telle que la poudre de marque STARCK®, de pureté 98,5 % et de granulométrie inférieure à 10 µm.

La poudre de composition de brasure, (Si et métal) éventuellement additionnée de poudre de SiC et/ou de C pur, est mise en suspension de manière classique dans un liant organique liquide, de préférence relativement visqueux, qui se décompose par exemple entre 100 et 300°C sans laisser de traces. Il peut s'agir par exemple d'un cément de type NICROBRAZ®.

Les deux surfaces des pièces en matériaux à base de SiC à assembler sont dégraissées dans un solvant organique par exemple du type cétone, ester, éther, alcool, ou un mélange de ceux-ci, etc. un solvant préféré étant l'acétone ou un mélange acétone-alcool éthylique-éther par exemple dans les proportions 1/3, 1/3, 1/3 ; puis séchées.

Les pièces en matériaux à base de SiC à assembler sont en général au nombre de deux, mais on peut aussi assembler simultanément un plus grand nombre de pièces pouvant aller jusqu'à 100.

Par pièce en matériaux à base de SiC, on entend généralement tout élément, ou entité de forme quelconque entrant par exemple, après assemblage avec une ou plusieurs autres pièces, dans des structures de plus grande dimension.

Comme exemples de matériaux à base de SiC, on peut citer le carbure de silicium dense pur ou carbure de silicium fritté sans pression ("PLS-SiC", à savoir PressureLess Sintered SiC, en anglais) ; le carbure de silicium infiltré Si (appelé SiSiC ou RBSC contenant 5 à 20 % Si) ; le carbure de silicium recristallisé poreux (appelé RSiC) ; le graphite silicium (C-SiC) constitué de graphite et recouvert par une couche de SiC par exemple de 0,1 à 1 mm d'épaisseur ; ainsi que les composites SiC/SiC, par exemple, à fibres ou à « Whiskers » ; les composites C/SiC, par exemple, à fibres ou à « Whiskers » de carbone et à matrice SiC ; et encore les monocristaux de SiC ; et les composites du SiC avec une autre céramique, par exemple, les composites SiC/Si₃N₄ et SiC/TiN. Il a été constaté, de manière surprenante, que le procédé de l'invention permettait un brasage des composites avec d'excellents résultats.

Par matériau à base de carbure de silicium, on entend généralement ici tous les matériaux dont la teneur en SiC est supérieure ou égale à 80 % en poids.

Toutefois, certains matériaux auxquels l'invention peut s'appliquer et qui sont cités en exemple ci-dessus peuvent avoir une teneur en carbure de silicium inférieure à 80 %.

Les deux pièces ou plus à assembler peuvent être en un même matériau, à base de carbure de silicium par exemple en PLS (Pressureless Sintered) α-SiC, ou en composite SiC-SiC ou chacune des pièces peut être en un matériau différent.

Pour réaliser l'ajout du renfort de SiC et/ou de C, on peut aussi, par exemple, enduire les deux surfaces des pièces en matériaux à base de SiC à l'aide d'une poudre de SiC pur et/ou de C pur, du type de celles décrites ci-dessus, mise(s) en suspension dans un liant organique analogue à celui mentionné plus haut. Il peut s'agir, par exemple, d'un solvant de type NICROBRAZ®.

Les surfaces des parties des pièces à assembler sont ensuite enduites de la suspension de la composition de brasure (Si et métal), puis les surfaces mises en contact. Ou bien on peut mettre en contact les surfaces des parties des pièces à assembler enduites de la suspension de SiC et/ou de C, et appliquer ensuite la suspension de la composition de brasure (Si et métal) à proximité du joint formé par les deux surfaces de matériau à base de SiC mises en contact et déjà enduites de la suspension de renfort.

Une autre manière de réaliser l'apport, l'ajout de renfort de SiC et/ou de C est d'ajouter des particules de SiC et/ou de C dans la composition de brasure.

L'ajout de renfort peut se faire encore en intercalant ledit renfort de SiC et/ou de C entre les pièces à assembler.

Dans ce cas, le renfort se présente, de préférence, sous la forme d'un tissu, d'un non-tissé, d'un feutre, ou d'une mousse de SiC et/ou de C.

A titre d'exemple de tels tissus, on peut citer les tissus de carbone de marque HEXCEL®. L'épaisseur de tels renforts, par exemple en tissu, est généralement de 100 µm à 500 µm, et leur masse spécifique est généralement de 100 à 700 g/m². Cette épaisseur et cette masse spécifique sont choisies de façon à ce que soit respectée la proportion massique, indiquée plus haut, entre la composition de brasure (Si et métal) et le renfort de Si et/ou de C.

Les pièces alors prêtes à être brasées sont alors disposées dans un four, sous vide ou sous atmosphère de gaz neutre.

Généralement, le vide est un vide secondaire, c'est-à-dire que la pression est de 10⁻³ à 10⁻⁵ Pa, par exemple, de 10⁻⁴ Pa.

De préférence, le gaz neutre est de l'argon.

L'invention permet même d'utiliser de l'argon de qualité commerciale ayant une pression partielle d'oxygène non négligeable.

On effectue tout d'abord un premier palier de température qui permet un dégazage de l'ensemble et une évaporation du liant encore appelée "déliantage" ; tandis qu'un second palier de température permet le brasage proprement dit.

Le premier palier est effectué par exemple à une température de 200 à 300°C, de préférence de 300°C pendant une durée par exemple de 0,5 à 1 heure.

Le second palier est effectué à une température correspondant à la température de fusion de la composition de brasure choisie, mais cette température, est, de préférence, une température au moins supérieure de 25°C à la température du liquidus de la composition.

Selon les compositions, cette température du liquidus varie de 900 à 1 820°C. La température de brasage variera donc, par exemple, de 950°C à 1 850°C, de préférence de 1 200 à 1 850°C.

Une telle température de fusion des compositions permet, selon un autre avantage du procédé de l'invention, une utilisation de l'assemblage, notamment, sous air jusqu'à 1 000°C et même jusqu'à 1 600°C.

La durée du brasage, c'est-à-dire le cycle thermique de réalisation de l'assemblage est, selon l'invention, généralement de courte durée : le temps de palier nécessaire est par exemple inférieur à 10 min. et de préférence de 5 à 10 min.

On refroidit ensuite l'assemblage jusqu'à la température ambiante à raison par exemple de 5°C par minute.

Les assemblages de pièces en carbure de silicium comportant des joints préparés par le procédé selon l'invention permettent de réaliser des structures, appareils, composants de formes complexes ayant des températures d'utilisation élevées pouvant aller jusqu'à 1 600°C avec une grande précision.

On sait en effet que les propriétés mécaniques du carbure de silicium :
- grande dureté ;
- bas coefficient de dilatation ;
- résistance à la rupture élevée ;
- bonne résistance au choc thermique ;
- ainsi que sa très bonne conductivité en font un matériau incontournable pour les présentes et les futures applications industrielles à haute température.

De plus, le SiC présente une très bonne résistance chimique aux divers acides, y compris l'acide fluorhydrique et une très bonne résistance à l'oxydation sous air à haute température jusqu'à 1 300°C.

Toutes ces propriétés font du SiC un matériau de choix, en particulier pour la réalisation d'échangeurs céramiques pour le génie thermique et le génie chimique. Ainsi, parmi les applications des assemblages obtenus par le procédé selon l'invention, on peut aussi citer par exemple les échangeurs thermiques, les brûleurs, les réacteurs, les garnitures de pompe, les résistances de four sous air moyenne température, mais également les chambres de combustion pour l'automobile, les composites pour l'industrie aéronautique ainsi que toutes les structures destinées à des environnements corrosifs à des températures jusqu'à 1 600°C.

La grande rigidité du SiC et sa faible densité est également avantageuse pour des applications dans le domaine spatial.

L'invention va maintenant être décrite au moyen des exemples suivants donnés bien entendu à titre illustratif et non limitatif.

Les exemples qui suivent ne sont pas exhaustifs, ils visent uniquement à illustrer le procédé de l'invention en utilisant diverses compositions de brasure avec différents renforts et différentes céramiques contenant du SiC. En effet, parmi les alliages, mentionnés ci-dessus, on distingue plusieurs catégories selon le métal utilisé qui donnera des caractéristiques physiques différentes, dont notamment, la température de fusion et le coefficient de dilatation.

Ainsi, les familles de métaux qui ont des comportements similaires sont Ru et Ir ; Pd, Pt et Rh ; Co et Cr ; V et Zr ; Re ; et Ce.

### Exemple 1 :

Cet exemple concerne la tenue mécanique d'une liaison entre deux pièces en "PLS α-SiC (PressureLess Sintered α-SiC)", c'est-à-dire en carbure de silicium α fritté sous pression, obtenue en mettant en oeuvre le procédé selon l'invention utilisant une composition de brasure en Ru₂Si₃ avec ajout d'un renfort en poudre de SiC pur représentant 50 % en poids de la composition de brasure.

### a) Préparation de la composition de brasure et des pièces à assembler :

Les deux surfaces de SiC à assembler sont dégraissées dans un solvant organique, puis séchées. Les surfaces de SiC sont enduites de poudre de SiC pur, poudre SiC de marque STARCK®, de pureté 98,5 %, et de granulométrie inférieure à 10 µm, au moyen d'un cément organique. La proportion de poudre de SiC enduite est de 50 % en poids de la poudre de brasure Ru₂Si₃ ci-après.

Une poudre du composé Ru₂Si₃, pré-élaborée à partir des métaux Ru et Si, est mélangée à un liant organique qui est un cément de type NICROBRAZ®, et appliquée à proximité du joint formé par les deux surfaces de SiC enduites mises en contact. La proportion massique entre la poudre de Ru₂Si₃ appliquée à l'extérieur du joint, et le renfort de SiC, enduit entre les pièces est de 100/50.

### b) Brasage :

Les deux pièces en SiC prêtes à braser sont disposées dans le four sous vide secondaire. Un premier palier à 300°C pendant 1 heure est réalisé pour éliminer le liant organique puis le brasage proprement dit est effectué dans les conditions suivantes après entrée d'argon :
- température de brasage : 1 750°C ;
- durée du palier : 5 min. ;
- atmosphère : argon.

L'assemblage obtenu est ensuite refroidi jusqu'à la température ambiante à raison de 5°C par minute.

### c) Test mécanique de la liaison :

Un test mécanique de cisaillement/compression a été réalisé sur cette liaison. La rupture de la pièce est supérieure à 193 MPa, en cisaillement pur.

### Exemple 2 :

Cet exemple concerne la tenue mécanique d'une liaison entre deux pièces en "PLS α-SiC (PressureLess Sintered α-SiC)", c'est-à-dire en carbure de silicium α fritté sous pression, obtenue en mettant en oeuvre le procédé selon l'invention utilisant une composition de brasure constituée de 42,5 % en poids de Ru et de 57,5 % en poids de Si avec ajout d'un renfort en poudre de SiC pur représentant 5 % en poids de la composition de brasure.

### a) Préparation de la composition de brasure et des pièces à assembler :

Les deux surfaces de SiC à assembler sont dégraissées dans un solvant organique, puis séchées.

Les surfaces de SiC sont enduites de poudre de SiC pur, poudre SiC de marque STARCK, de pureté 98,5 % et de granulométrie inférieure à 10 µm, au moyen d'un cément organique. La proportion de poudre de SiC enduite est de 5 % en poids de la poudre de brasure ci-après.

Une poudre du composé Ru₂Si₃, pré-élaborée à partir des métaux Ru et Si, est mélangée à une poudre de Si pur de marque CERAC®, de pureté 99,99 % et de granulométrie inférieure à 10 µm dans les proportions massiques suivantes : 60 % en poids de Ru₂Si₃ et 40 % en poids de Si. Ce mélange correspond à une composition globale de 42 % en poids de Ru et 57,5 % en poids de Si. La composition est mélangée à un liant organique qui est un cément de type NICROBRAZ® et appliquée à proximité du joint formé par les deux surfaces de SiC enduites mises en contact. La proportion massique entre la poudre Ru 42,5 % en poids - Si 57,5 % en poids, appliquée à l'extérieur du joint, et le renfort de SiC enduit entre les pièces est de 100/5.

### b) Brasage :

Les deux pièces de SiC prêtes à braser sont disposées dans le four sous vide secondaire. Un premier palier à 300°C pendant 1 heure est réalisé pour éliminer le liant organique, puis le brasage proprement dit est effectué dans les conditions suivantes :
- température de brasage : 1 400°C ;
- durée du palier : 5 min. ;
- vide secondaire : 10⁻⁵ mbars.

L'assemblage obtenu est ensuite refroidi jusqu'à la température ambiante, à raison de 5°C par minute.

### c) Test mécanique de la liaison :

Un test mécanique de cisaillement/compression a été réalisé sur cette liaison. La rupture de la pièce est supérieure à 256 MPa en cisaillement pur.

### Exemple 3 :

Cet exemple concerne la tenue mécanique d'une liaison entre deux pièces en "PLS α-SiC (PressureLess Sintered α-SiC)", c'est-à-dire en carbure de silicium α fritté sous pression, obtenue en mettant en oeuvre le procédé selon l'invention utilisant une composition de brasure constituée de 77 % en poids de Pt et de 23 % en poids de Si avec ajout d'un renfort en poudre de SiC pur représentant 30 % en poids de la composition de brasure.

### a) Préparation de la composition de brasure et des pièces à assembler :

Les deux surfaces de SiC à assembler sont dégraissées dans un solvant organique, puis séchées. Les surfaces de SiC sont enduites de poudre de SiC pur, de marque STARCK, de pureté 98,5 % et de granulométrie inférieure à 10 µm, au moyen d'un cément organique. La proportion de poudre de SiC enduite est de 30 % en poids de la poudre de brasure ci-après. Une poudre du composé PtSi, pré-élaborée à partir des métaux Pt et Si, est mélangée à une poudre de Si pur de marque CERAC®, de pureté 99,99 % et de granulométrie inférieure à 10 µm dans les proportions massiques suivantes : 88,5 % en poids de PtSi et 11,5 % en poids de Si. Ce mélange correspond à une composition globale de 77 % en poids de Pt et 23 % en poids de Si. La composition est mélangée à un liant organique qui est un cément de type NICROBRAZ® et appliquée à proximité du joint formé par les deux surfaces de SiC enduites mises en contact. La proportion massique entre la composition Pt 77 % en poids - Si 23 % en poids, appliquée à l'extérieur du joint, et le renfort de SiC, enduit entre les pièces, est de 100/30.

### b) Brasage :

Les deux pièces de SiC prêtes à braser sont disposées dans le four sous vide secondaire. Un premier palier à 300°C pendant 1 heure est réalisé pour éliminer le liant organique, puis le brasage proprement dit est effectué dans les conditions suivantes :
- température de brasage 1 200°C ;
- durée de palier : 5 min. ;
- vide secondaire : 10⁻⁵ mbars.

L'assemblage obtenu est ensuite refroidi jusqu'à la température ambiante, à raison de 5°C par minute.

### c) Test mécanique de la liaison :

Un test mécanique de cisaillement/compression a été réalisé sur cette liaison. La rupture de la pièce est supérieure à 236 MPa en cisaillement pur.

### Exemple 4 :

Cet exemple concerne la tenue mécanique d'une liaison entre deux pièces en "PLS α-SiC (PressureLess Sintered α-SiC)", c'est-à-dire en carbure de silicium α fritté sous pression, obtenue en mettant en oeuvre le procédé selon l'invention utilisant une composition de brasure constituée 26,5 % en poids de zirconium et de 73,5 % en poids de Si, avec ajout d'un renfort en poudre de SiC pur représentant 5 % en poids de la composition de brasure.

### a) Préparation de la composition de brasure et des pièces à assembler :

Une poudre commerciale du composé ZrSi₂ de marque CERAC®, de pureté 99,5 % et de granulométrie inférieure à 45 µm a été mélangée à une poudre de Si pur de marque CERAC®, de pureté 99,5 % et de granulométrie inférieure à 10 µm dans les proportions massiques suivantes : 43 % en poids de ZrSi₂ et 57 % en poids de Si. Ce mélange correspond à une composition globale de 26,5 % en poids de Zr et 73,5 % en poids de Si. Les deux surfaces de SiC à assembler sont dégraissées dans un solvant organique, puis séchées. Les surfaces de SiC sont enduites de poudre de SiC pur, poudre de SiC de marque STARCK®, de pureté 98,5 % et de granulométrie inférieure à 10 µm, au moyen d'un cément organique. La proportion de poudre de SiC enduite est de 5 % en poids de la poudre de brasure Zr 26,5 % en poids - Si 73,5 % en poids. La composition Zr 26,5 % en poids - Si 73,5 % en poids est mélangée à un liant organique qui est un cément de type NICROBRAZ® et appliquée à proximité du joint formé par les deux surfaces de SiC enduites mises en contact. La proportion massique entre Zr 26,5 % en poids - Si 73,5 % en poids, appliquée à l'extérieur du joint, et le renfort de SiC, enduit entre les pièces est de 100/5.

### b) Brasage :

Les deux pièces en SiC prêtes à braser sont disposées dans le four. Un premier palier à 300°C pendant 1 heure est réalisé pour éliminer le liant organique, puis le brasage proprement dit est effectué dans les conditions suivantes :
- température de brasage : 1 400°C ;
- durée du palier : 5 min. ;
- vide secondaire : 10⁻⁵ mbars.

L'assemblage obtenu est ensuite refroidi jusqu'à la température ambiante, à raison de 5°C par minute.

### c) Test mécanique de la liaison :

Un test mécanique de cisaillement/compression a été réalisé sur cette liaison. Il n'y a pas eu de rupture, la tenue de l'assemblage étant supérieure à 270 MPa en cisaillement pur.

### Exemple 5 :

Cet exemple concerne la tenue mécanique d'une liaison entre deux pièces en composite C/SiC obtenue en mettant en oeuvre le procédé selon l'invention utilisant une composition de brasure constituée de 26,5 % en poids de zirconium et de 73,5 % en poids de Si, avec ajout d'un renfort en poudre de SiC pur représentant 5 % en poids de la composition de brasure.

### a) Préparation de la composition de brasure et des pièces à assembler :

Une poudre commerciale du composé ZrSi₂ de marque CERAC®, de pureté 99,5 % et de granulométrie inférieure à 45 µm a été mélangée à une poudre de Si pur de marque CERAC®, de pureté 99,99 % et de granulométrie inférieure à 10 µm dans les proportions massiques suivantes : 43 % en poids de ZrSi₂ et 57 % en poids de Si. Ce mélange correspond à une composition globale de 26,5 % en poids de Zr et 73,5 % en poids de Si. Les deux surfaces de composite C/SiC à assembler sont dégraissées dans un solvant organique, puis séchées. Les surfaces de C/SiC sont enduites de poudre de SiC pur, poudre de SiC de marque STARCK®, de pureté 98,5 % et de granulométrie inférieure à 10 µm, au moyen d'un cément organique. La proportion de poudre SiC enduite est de 5 % en poids de la poudre de brasure Zr 26,5 % en poids - Si 73,5 % en poids. La composition de brasure Zr 26,5 % en poids - Si 73,5 % en poids est mélangée à un liant organique qui est un cément de type NICROBRAZ® et appliquée à proximité du joint formé par les deux surfaces de C/SiC enduites mises en contact. La proportion massique entre Zr 26,5 % en poids - Si 73,5 % en poids, appliquée à l'extérieur du joint, et le renfort SiC, enduit entre les pièces, est de 100/5.

### b) Brasage :

Les deux pièces en composite C/SiC prêtes à braser sont disposées dans le four. Un premier palier à 300°C pendant 1 heure est réalisé pour éliminer le liant organique, puis le brasage proprement dit est effectué dans les conditions suivantes :
- température de brasage : 1 400°C ;
- durée du palier : 10 min. ;
- vide secondaire : 10⁻⁵ mbars.

L'assemblage obtenu est ensuite refroidi jusqu'à la température ambiante, à raison de 5°C par minute.

### c) Test mécanique de la liaison :

Un test mécanique de cisaillement/compression a été réalisé sur cette liaison. La rupture de la pièce est supérieure à 40 MPa en cisaillement pur. Il est à noter que la tenue de la jonction est limitée par la tenue du composite lui-même, puisque la rupture a lieu dans le composite et non dans le joint.

### Exemple 6 :

Cet exemple concerne la tenue mécanique d'une liaison entre deux pièces en PLS α-SiC (« PressureLess Sintered α-SiC »), c'est-à-dire en carbure de silicium α fritte sans pression, obtenue en mettant en oeuvre le procédé selon l'invention, utilisant une poudre de ZrSi₂, avec ajout d'un renfort en poudre de SiC pur représentant 50 % en poids de la composition de brasure.

### a) Préparation de la composition de brasure et des pièces à assembler :

Les deux surfaces de SiC à assembler sont dégraissées dans un solvant organique, puis séchées. Les surfaces de SiC sont enduites de poudre de SiC pur, poudre de SiC de marque STARCK® - pureté 98,5 % - granulométrie < 10 µm, au moyen d'un cément organique. La proportion de poudre de SiC enduite est de 50 % en poids de la poudre de ZrSi₂ suivante. La poudre de ZrSi₂ est mélangée à un liant organique, qui est un cément de type NICROBAZ®, et appliquée à proximité du joint formé par les deux surfaces de SiC enduites mises en contact. La proportion massique entre ZrSi2, appliquée à l'extérieur du joint, et le renfort de SiC, enduit entre les pièces, est de 100/50.

### b) Brasage :

Les deux pièces en SiC, prêtes à braser, sont disposées dans le four sous vide secondaire. Un premier palier à 300°C pendant 1 heure est réalisé pour éliminer le liant organique, puis le brasage, proprement dit, est effectué dans les conditions suivantes, après entrée d'argon :
- température de brasage : 1 700°C ;
- durée du palier : 10 min. ;
- atmosphère : argon.

L'assemblage obtenu est ensuite refroidi jusqu'à la température ambiante, à raison de 5°C par minute.

### c) Test mécanique de la liaison :

Un test mécanique de cisaillement/compression a été réalisé sur cette liaison. La rupture de la pièce est supérieure à 150 MPa en cisaillement pur.

### Exemple 7 :

Cet exemple concerne la tenue mécanique d'une liaison entre deux pièces en « PLS α-SiC (PressureLess Sintered α-Sic) », c'est-à-dire en carbure de silicium α fritté sans pression, obtenue en mettant en oeuvre le procédé de l'invention, utilisant une composition de brasure constituée de 43 % en poids de cérium et de 57 % en poids de Si, et un renfort en poudre de SiC pur représentant 10 % en poids de la composition de brasure.

### a) Préparation de la composition de brasure et des pièces à assembler :

Les deux surfaces de SiC à assembler sont dégraissées dans un solvant organique, puis séchées. Les surfaces de SiC sont enduites de poudre de SiC pur au moyen d'un cément organique de marque STARCK®, de pureté 98,5 % et de granulométrie inférieure à 10 µm. La proportion de poudre SiC enduite est de 50 % en poids de la composition ci-après. Une poudre commerciale du composé CeSi₂ de marque CERAC®, de pureté 99,5 % et de granulométrie inférieure à 10 µm, est mélangée à une poudre de Si pur de marque CERAC®, de pureté 99,5 % et de granulométrie inférieure à 10 µm, dans les proportions massiques suivantes : 59,3 % en poids de CeSi₂ et 40,7 % en poids de Si. Ce mélange correspond à une composition globale de 43 % en poids de Ce et 57 % en poids de Si (Ce₄₃Si₅₇). Cette composition est mélangée à un liant organique qui est un cément de type NICROBRAZ® et appliquée à proximité du joint formé par les deux surfaces de SiC enduites, mises en contact.

La proportion massique entre Ce 43 % en poids - Si 57 % en poids, appliquée à l'extérieur du joint, et le renfort de SiC, enduit entre les pièces, est de 100/10.

### b) Brasage :

Les deux pièces en SiC, prêtes à braser, sont disposées dans le four. Un premier palier à 300°C/1 heure est réalisé pour éliminer le liant organique, puis le brasage, proprement dit, est effectué dans les conditions suivantes :
- température de brasage : 1 300°C ;
- durée du palier : 5 min. ;
- vide secondaire : 10⁻⁵ mbars.

L'assemblage obtenu est ensuite refroidi jusqu'à la température ambiante, à raison de 5°C par minute.

### c) Test mécanique de la liaison :

Un test mécanique de cisaillement/compression a été réalisé sur cette liaison. La tenue de l'assemblage est supérieure à 195 MPa en cisaillement pur.

### Exemple 8 :

Cet exemple concerne la tenue mécanique d'une liaison entre deux pièces en « PLS α-SiC (PressureLess Sintered α-SiC) », c'est-à-dire de carbure de silicium α fritté sans pression, obtenue en mettant en oeuvre le procédé de l'invention, en utilisant une composition de brasure constituée de Re₅Si₃, et un renfort de poudre de SiC pur, représentant 50 % en poids de la composition de brasure.

### a) Préparation de la composition de brasure et des pièces à assembler :

Les deux surfaces de SiC à assembler sont dégraissées dans un solvant organique, puis séchées. Les surfaces de SiC sont enduites de poudre de SiC pur, poudre de SiC de marque STARCK®, de pureté 98,5 % et de granulométrie inférieure à 10 µm, au moyen d'un cément organique. La proportion de poudre SiC enduite est de 50 % en poids de la composition Re₅Si₃ ci-après. Une poudre commerciale de composition Re₅Si₃ de marque GOODFELLOW®, de pureté 99,5 % et de granulométrie inférieure à 40 µm est mélangée à un liant organique qui est un cément de type NICROBRAZ® et appliquée à proximité du joint formé par les deux surfaces de SiC enduites mises en contact. La proportion massique entre Re₅Si₃, appliquée à l'extérieur du joint, et le renfort de SiC enduit entre les pièces, est de 100/50.

### b) Brasage :

Les deux pièces en SiC prêtes à braser sont disposées dans le four sous vide secondaire. Un premier palier à 300°C pendant 1 heure est réalisé pour éliminer le liant organique, puis le brasage, proprement dit, est effectué dans les conditions suivantes :
- température de brasage : 1 800°C ;
- durée du palier : 10 min. ;
- atmosphère : argon.

L'assemblage obtenu est ensuite refroidi jusqu'à la température ambiante à raison de 5°C par minute.

### c) Test mécanique de la liaison :

Un test mécanique de cisaillement/compression a été réalisé sur cette liaison. La tenue de l'assemblage est supérieure à 265 MPa en cisaillement pur.

### Exemple 9 :

Cet exemple concerne la tenue mécanique d'une liaison entre deux pièces en composite SiC/SiC, obtenue en mettant en oeuvre le procédé de l'invention, en utilisant une composition de brasure constituée de Re₅Si₃, et d'un renfort de poudre de SiC pur, représentant 50 % en poids de la composition de brasure.

### a) Préparation de la composition de brasure et des pièces à assembler :

Les deux surfaces de composite SiC/SiC à assembler sont dégraissées dans un solvant organique, puis séchées. Les surfaces de SiC/SiC sont enduites de poudre de SiC pur, poudre de SiC de marque STARCK®, de pureté 98,5 %, et de granulométrie inférieure à 10 µm, au moyen d'un cément organique. La proportion de poudre de SiC enduite est de 50 % en poids de la composition de Re₅Si₃ ci-après. Une poudre commerciale de composition Re₅Si₃ de marque GOODFELLOW®, de pureté 99,5 %, et de granulométrie inférieure à 40 µm, est mélangée à un liant organique qui est un cément de type NICROBRAZ®, et appliquée à proximité du joint formé par les deux surfaces de composite SiC/SiC, mises en contact. La proportion massique entre Re₅Si₃, appliquée à l'extérieur du joint, et le renfort SiC, enduit entre les pièces, est de 100/50.

### b) Brasage :

Les deux pièces en composite, prêtes à braser, sont disposées dans le four sous vide secondaire. Un premier palier à 300°C pendant 1 heure est réalisé pour éliminer le liant organique, puis le brasage, proprement dit, est effectué dans les conditions suivantes :
- température de brasage : 1 800°C ;
- durée du palier : 5 min. ;
- atmosphère : argon.

L'assemblage obtenu est ensuite refroidi jusqu'à la température ambiante, à raison de 5°C par minute.

### c) Test mécanique de la liaison :

Un test mécanique de cisaillement/compression a été réalisé sur cette liaison. La rupture de la pièce est supérieure à 156 MPa en cisaillement pur.

## Revendications

1. Procédé d'assemblage d'au moins deux pièces en matériaux à base de carbure de silicium par brasage réfractaire non réactif, dans lequel on met en contact ces pièces avec une composition de brasure non réactive et on chauffe l'ensemble formé par les pièces et la composition de brasure à une température de brasage suffisante pour faire fondre la composition de brasure afin de former un joint réfractaire, dans lequel la composition de brasure non réactive est constituée, en pourcentages atomiques, de 40 à 97 % de silicium et de 60 à 3 % d'un autre élément choisi parmi le chrome, le rhénium, le vanadium, le ruthénium, l'iridium, le rhodium, le palladium, le cobalt, le platine, le cérium et le zirconium et dans lequel, préalablement au brasage, on effectue un ajout d'un renfort de SiC et/ou de C.

2. Procédé selon la revendication 1, dans lequel le brasage est effectué à une température de 950°C à 1 850°C.

3. Procédé selon la revendication 2, dans lequel ladite composition de brasure est constituée, en pourcentages atomiques, de 50 à 97 % de silicium et de 50 à 3 % de chrome.

4. Procédé selon la revendication 2, dans lequel ladite composition de brasure est constituée, en pourcentages atomiques, de 40 à 97 % de silicium et de 60 à 3 % de rhénium.

5. Procédé selon la revendication 2, dans lequel ladite composition de brasure est constituée, en pourcentages atomiques, de 55 à 97 % de silicium et de 45 à 3 % de vanadium.

6. Procédé selon la revendication 2, dans lequel ladite composition de brasure est constituée, en pourcentages atomiques, de 60 à 97 % de silicium et de 40 à 3 % de zirconium.

7. Procédé selon la revendication 2, dans lequel ladite composition de brasure est constituée, en pourcentages atomiques, de 45 à 97 % de silicium et de 55 à 3 % de ruthénium.

8. Procédé selon la revendication 2, dans lequel ladite composition de brasure est constituée, en pourcentages atomiques, de 48 à 97 % de silicium et de 52 à 3 % d'iridium.

9. Procédé selon la revendication 2, dans lequel ladite composition de brasure est constituée, en pourcentages atomiques, de 50 à 97 % de silicium et de 50 à 3 % de rhodium.

10. Procédé selon la revendication 2, dans lequel ladite composition de brasure est constituée, en pourcentages atomiques, de 50 à 97 % de silicium et de 50 à 3 % de palladium.

11. Procédé selon la revendication 2, dans lequel ladite composition de brasure est constituée, en pourcentages atomiques, de 58 à 97 % de silicium et de 42 à 3 % de cobalt.

12. Procédé selon la revendication 2, dans lequel ladite composition de brasure est constituée, en pourcentages atomiques, de 50 à 97 % de silicium et de 50 à 3 % de platine.

13. Procédé selon la revendication 2, dans lequel ladite composition de brasure est constituée, en pourcentages atomiques, de 53 à 97 % de silicium et de 47 à 3 % de cérium.

14. Procédé selon l'une quelconque des revendications 1 à 13, dans lequel on forme une poudre de composition de brasure, on met en suspension cette poudre dans un liant organique et en ce qu'on enduit les parties des pièces à assembler avec la suspension obtenue.

15. Procédé selon l'une quelconque des revendications 1 à 14, dans lequel ledit ajout d'un renfort de SiC et/ou de C est réalisé en une quantité de 5 à 60 % en poids de SiC et/ou de C par rapport au poids de la composition de la brasure.

16. Procédé selon l'une quelconque des revendications 1 à 15, dans lequel ledit ajout d'un renfort de SiC et/ou de C est réalisé en ajoutant ledit renfort de SiC et/ou de C à la composition de brasure, préalablement au brasage, ou en plaçant le renfort à proximité et/ou sur, et/ou entre les pièces à assembler.

17. Procédé selon l'une quelconque des revendications 1 à 16, dans lequel ledit renfort de SiC et/ou de C se présente sous une forme choisi parmi une poudre, des grains, des morceaux, des particules, un tissu, un non-tissé, un feutre et une mousse.

18. Procédé selon l'une quelconque des revendications 15 à 17, dans lequel ledit ajout de SiC et/ou de C est réalisé en mélangeant directement de la poudre de SiC et/ou de C à la composition de brasure.

19. Procédé selon l'une quelconque des revendications 15 à 17 dans lequel on réalise ledit ajout d'un renfort de SiC et/ou de C en mettant la poudre de SiC et/ou de C en suspension dans un liant organique et en enduisant les pièces à assembler avec la suspension obtenue.

20. Procédé selon l'une quelconque des revendications 15 à 17, dans lequel on réalise ledit ajout d'un renfort de SiC et/ou de C en ajoutant des particules de SiC et/ou de C dans la composition de brasure.

21. Procédé selon l'une quelconque des revendications 15 à 17, dans lequel on réalise ledit ajout d'un renfort de SiC et/ou de C en intercalant un tissu, non-tissé, feutre ou mousse, de carbure de silicium et/ou de carbone entre les pièces à assembler.

22. Procédé selon l'une quelcoque des revendications 1 à 21, dans lequel les matériaux à base de carbure de silicium sont choisis parmi le carbure de silicium fritté sans pression ("PLS-SiC") ; le carbure de silicium infiltré Si ("SiSiC" ou "RBSC") ; le carbure de silicium recristallisé poreux ("RSiC") ; le graphite silicium ("C-SiC") constitué de graphite et recouvert par une couche de SiC ; les composites SiC/SiC ; par exemple, à fibres ou à « whiskers » ; les composites C/SiC, par exemple, à fibres ou à « whiskers » de carbone et à matrice SiC ; les monocristaux de SiC ; les composites du SiC avec une autre céramique, par exemple les composites SiC/Si₃N₄ et SiC/TiN.

23. Procédé selon l'une quelconque des revendications 1 à 22, dans lequel lesdits matériaux à base de carbure de silicium ont une teneur en carbure de silicium supérieure ou égale à 80 % en poids.

24. Composition pour le brasage réfractaire non réactif de pièces en matériaux à base de carbure de silicium comprenant un ajout d'un renfort de SiC et/ou de C et une composition de brasure non réactive choisie parmi :
- une composition de brasure constituée, en pourcentages atomiques, de 40 à 97 % de silicium et de 60 à 3 % de rhénium ;
- une composition de brasure constituée, en pourcentages atomiques, de 45 à 97 % de silicium et de 55 à 3 % de ruthénium ;
- une composition de brasure constituée, en pourcentages atomiques, de 48 à 97 % de silicium et de 52 à 3 % d'iridium ;
- une composition de brasure constituée, en pourcentages atomiques, de 50 à 97 % de silicium et de 50 à 3 % de palladium ;
- une composition de brasure constituée, en pourcentages atomiques, de 50 à 97 % de silicium et de 50 à 3 % de platine ;
- une composition de brasure constituée, en pourcentages atomiques, de 53 à 97 % de silicium et de 47 à 3 % de cérium;
ou une composition choisie parmi les compositions suivantes :
- une composition de brasure constituée, en pourcentages atomiques, de 50 à 97 % de silicium et de 50 à 3 % en chrome ;
- une composition de brasure constituée, en pourcentages atomiques, de 55 à 97 % de silicium et de 45 à 3 % de vanadium ;
- une composition de brasure constituée, en pourcentages atomiques, de 60 à 97 % de silicium et de 40 à 3 % de zirconium ;
- une composition de brasure constituée, en pourcentages atomiques, de 50 à 97 % de silicium et de 50 à 3 % de rhodium ;
- une composition de brasure constituée, en pourcentages atomiques, de 58 à 97 % de silicium et de 42 à 3 % de cobalt.

25. Joint réfractaire susceptible d'être obtenu par le procédé selon l'une quelconque des revendications 1 à 23.

26. Assemblage comprenant au moins deux pièces en matériaux à base de SiC, susceptible d'être obtenu par le procédé selon l'une quelconque des revendications 1 à 23.

## Patentansprüche

1. Verfahren zum Verbinden von wenigstens zwei Teilen aus Materialien auf Siliciumcarbidbasis durch nicht-reaktives feuerfestes Löten, in welchem die Teile mit einer nicht-reaktiven Lotzusammensetzung in Kontakt gebracht werden und das aus den Teilen und der Lotzusammensetzung gebildete Ganze auf eine Löttemperatur erhitzt wird, die ausreicht, um die Lotzusammensetzung schmelzen zu lassen, um eine feuerfeste Verbindung zu bilden, in welchem die nicht-reaktive Lotzusammensetzung 40 bis 97 % Silicium und 60 bis 3 % eines anderen Elements, ausgewählt aus Chrom, Rhenium, Vanadium, Ruthenium, Iridium, Rhodium, Palladium, Cobalt, Platin, Cer und Zirconium, angegeben als Atomprozentgehalte, enthält und in welchem vor dem Löten die Zugabe einer Verstärkung aus SiC und/oder C erfolgt.

2. Verfahren nach Anspruch 1, in welchem das Löten bei einer Temperatur von 950°C bis 1850°C erfolgt.

3. Verfahren nach Anspruch 2, in welchem die Lotzusammensetzung 50 bis 97 % Silicium und 50 bis 3 % Chrom, angegeben als Atomprozentgehalte, enthält.

4. Verfahren nach Anspruch 2, in welchem die Lotzusammensetzung 40 bis 97 % Silicium und 60 bis 3 % Rhenium, angegeben als Atomprozentgehalte, enthält.

5. Verfahren nach Anspruch 2, in welchem die Lotzusammensetzung 55 bis 97 % Silicium und 45 bis 3 % Vanadium, angegeben als Atomprozentgehalte, enthält.

6. Verfahren nach Anspruch 2, in welchem die Lotzusammensetzung 60 bis 97 % Silicium und 40 bis 3 % Zirconium, angegeben als Atomprozentgehalte, enthält.

7. Verfahren nach Anspruch 2, in welchem die Lotzusammensetzung 45 bis 97 % Silicium und 55 bis 3 % Ruthenium, angegeben als Atomprozentgehalte, enthält.

8. Verfahren nach Anspruch 2, in welchem die Lotzusammensetzung 48 bis 97 % Silicium und 52 bis 3 % Iridium, angegeben als Atomprozentgehalte, enthält.

9. Verfahren nach Anspruch 2, in welchem die Lotzusämmensetzung 50 bis 97 % Silicium und 50 bis 3 % Rhodium, angegeben als Atomprozentgehalte, enthält.

10. Verfahren nach Anspruch 2, in welchem die Lotzusammensetzung 50 bis 97 % Silicium und 50 bis 3 % Palladium, angegeben als Atomprozentgehalte, enthält.

11. Verfahren nach Anspruch 2, in welchem die Lotzusammensetzung 58 bis 97 % Silicium und 42 bis 3 % Cobalt, angegeben als Atomprozentgehalte, enthält.

12. Verfahren nach Anspruch 2, in welchem die Lotzusaminensetzurig 50 bis 97 % Silicium und 50 bis 3 % Platin, angegeben als Atomprozentgehalte, enthält.

13. Verfahren nach Anspruch 2, in welchem die Lotzusammensetzung 53 bis 97 % Silicium und 47 bis 3 % Cer, angegeben als Atomprozentgehalte, enthält.

14. Verfahren nach einem der Ansprüche 1 bis 13, in welchem ein Pulver einer Lotzusammensetzung gebildet wird, dieses Pulver in einem organischen Bindemittel in Suspension gebracht wird und die Abschnitte bzw. Teile der zu verbindenden Teile mit der erhaltenen Suspension überzogen werden.

15. Verfahren nach einem der Ansprüche 1 bis 14, in welchem die Zugabe einer Verstärkung aus SiC und/oder C in einer Menge von 5 bis 60 Gew.-% SiC und/oder C, bezogen auf das Gewicht der Lotzusammensetzung, erfolgt.

16. Verfahren nach einem der Ansprüche 1 bis 15, in welchem die Zugabe einer Verstärkung aus SiC und/oder C durch Zugeben der Verstärkung aus SiC und/oder C zu der Lotzusammensetzung, vor dem Löten, oder durch Anbringen der Verstärkung in der Nähe und/oder auf und/oder zwischen den zu verbindenden Teilen erfolgt.

17. Verfahren nach einem der Ansprüche 1 bis 16, in welchem die Verstärkung aus SiC und/oder C in einer Form vorliegt, die ausgewählt wird aus einem Pulver, Körnern, Stücken, Teilchen, einem Gewebe, einem Nonwoven, einem Filz und einem Schaum.

18. Verfahren nach einem der Ansprüche 15 bis 17, in welchem die Zugabe von SiC und/oder C durch direktes Vermischen des Pulvers aus SiC und/oder C mit der Lotzusammensetzung erfolgt.

19. Verfahren nach einem der Ansprüche 15 bis 17, in welchem die Zugabe einer Verstärkung aus SiC und/oder C durch Suspendieren des Pulvers aus SiC und/oder C in einem organischen Bindemittel und Überziehen der zu verbindenden Teile mit der erhaltenen Suspension erfolgt.

20. Verfahren nach einem der Ansprüche 15 bis 17, in welchem die Zugabe einer Verstärkung aus Sie und/oder C durch Zugeben von Teilchen aus SiC und/oder C zu der Lotzusammensetzung erfolgt.

21. Verfahren nach einem der Ansprüche 15 bis 17, in welchem die Zugabe einer Verstärkung aus SiC und/oder C durch Einfügen eines Gewebes, Nonwovens, Filzes oder Schaums aus Siliciumcarbid und/oder Kohlenstoff zwischen die zu verbindenden Teile erfolgt.

22. Verfahren nach einem der Ansprüche 1 bis 21, in welchem die Materialien auf Siliciumcarbidbasis ausgewählt werden aus drucklos gesintertem Siliciumcarbid ("PLS-SiC"); silicium-infiltriertem Siliciumcarbid ("SiSiC" oder "RBSC"); porösem rekristallisiertem Siliciumcarbid ("RsiC"); Graphit-Silicium ("C-SiC"), das aus Graphit besteht und mit einer Schicht aus SiC überzogen ist; den SiC/SiC-Verbundwerkstoffen; zum Beispiel mit Fasern oder mit «Whiskers»; den C/SiC-Verbundwerkstoffen, zum Beispiel mit Fasern oder mit «Whiskers» aus Kohlenstoff und mit einer SiC-Matrix; den SiC-Einkristallen; den Verbundwerkstoffen aus SiC mit einer anderen Keramik, zum Beispiel SiC/Si₃N₄ und SiC/TiN-Verbundwerkstoffen.

23. Verfahren nach einem der Ansprüche 1 bis 22, in welchem die Materialien auf Siliciumcarbidbasis einen Siliciumcarbidgehalt größer oder gleich 80 Gew.-% aufweisen.

24. Zusammensetzung zum nicht-reaktiven feuerfesten Löten von Teilen aus Materialien auf Siliciumcarbidbasis, umfassend eine Zugabe einer Verstärkung aus SiC und/oder C und eine nicht-reaktive Lotzusammensetzung, ausgewählt aus:
- einer Lotzusammensetzung, enthaltend 40 bis 97 % Silicium und 60 bis 3 % Rhenium, angegeben als Atomprozentgehalte;
- einer Lotzusammensetzung, enthaltend 45 bis 97 % Silicium und 55 bis 3 % Ruthenium, angegeben als Atomprozentgehalte;
- einer Lotzusammensetzung, enthaltend 48 bis 97 % Silicium und 52 bis 3 % Iridium, angegeben als Atomprozentgehalte;
- einer Lotzusammensetzung, enthaltend 50 bis 97 % Silicium und 50 bis 3 % Palladium, angegeben als Atomprozentgehalte;
- einer Lotzusammensetzung, enthaltend 50 bis 97 % Silicium und 50 bis 3 % Platin, angegeben als Atomprozentgehalte;
- einer Lotzusammensetzung, enthaltend 53 bis 97 % Silicium und 47 bis 3 % Cer, angegeben als Atomprozentgehalte;
oder eine Zusammensetzung, ausgewählt aus den folgenden Zusammensetzungen:
- eine Lotzusammensetzung, enthaltend 50 bis 97 % Silicium und 50 bis 3 % Chrom, angegeben als Atomprozentgehalte;
- eine Lotzusammensetzung, enthaltend 55 bis 97 % Silicium und 45 bis 3 % Vanadium, angegeben als Atomprozentgehalte;
- eine Lotzusammensetzung, enthaltend 60 bis 97 % Silicium und 40 bis 3 % Zirconium, angegeben als Atomprozentgehalte;
- eine Lotzusammensetzung, enthaltend 50 bis 97 % Silicium und 50 bis 3 % Rhodium, angegeben als Atomprozentgehalte;
- eine Lotzusammensetzung, enthaltend 58 bis 97 % Silicium und 42 bis 3 % Cobalt, angegeben als Atomprozentgehalte.

25. Feuerfeste Verbindung, die durch das Verfahren nach einem der Ansprüche 1 bis 23 erhalten werden kann.

26. Verbund, umfassend wenigstens zwei Teile aus Materialien auf SiC-Basis, der durch das Verfahren nach einem der Ansprüche 1 bis 23 erhalten werden kann.

## Claims

1. Method for assembling at least two pieces of silicon carbide based materials by non reactive refractory brazing, wherein these pieces are put into contact with a non reactive brazing solder composition and the assembly formed by the pieces and the brazing solder composition is heated to a brazing temperature sufficient to fuse the composition of the brazing solder in order to form a refractory joint, in which the non reactive brazing composition is constituted, in atomic percentages, of from 40 to 97% silicon and of from 60 to 3% of another element chosen in the group consisting of chromium, rhenium, vanadium, ruthenium, iridium, rhodium, palladium, cobalt, platinum, cerium and zirconium and wherein, before brazing, a strengthening agent of SiC and/or C is added.

2. Method according to claim 1, wherein the brazing is carried out at a temperature of from 950°C to 1850°C.

3. Method according to claim 2, wherein said brazing solder composition is constituted, in atomic percentages, of from 50 to 97% silicon and of from 50 to 3% chromium.

4. Method according to claim 2, wherein said brazing solder composition is constituted, in atomic percentages, of from 40 to 97% silicon and of from 60 to 3% rhenium.

5. Method according to claim 2, wherein said brazing solder composition is constituted, in atomic percentages, of from 55 to 97% silicon and of from 45 to 3% vanadium.

6. Method according to claim 2, wherein said brazing solder composition is constituted, in atomic percentages, of from 60 to 97% silicon and of from 40 to 3% zirconium.

7. Method according to claim 2, wherein said brazing solder composition is constituted, in atomic percentages, of from 45 to 97% silicon and of from 55 to 3% ruthenium.

8. Method according to claim 2, wherein said brazing solder composition is constituted, in atomic percentages, of from 48 to 97% silicon and of from 52 to 3% iridium.

9. Method according to claim 2, wherein said brazing solder composition is constituted, in atomic percentages, of from 50 to 97% silicon and of from 50 to 3% rhodium.

10. Method according to claim 2, wherein said brazing solder composition is constituted, in atomic percentages, of from 50 to 97% silicon and of from 50 to 3% palladium.

11. Method according to claim 2, wherein said brazing solder composition is constituted, in atomic percentages, of from 58 to 97% silicon and of from 42 to 3% cobalt.

12. Method according to claim 2, wherein said brazing solder composition is constituted, in atomic percentages, of from 50 to 97% silicon and of from 50 to 3% platinum.

13. Method according to claim 2, wherein said brazing solder composition is constituted, in atomic percentages, of from 53 to 97% silicon and of from 47 to 3% cerium.

14. Method according to any one of claims 1 to 13, comprising the steps of forming a brazing solder composition powder, putting this powder into suspension in an organic binder, and coating the areas of the pieces to be assembled with the obtained suspension.

15. Method according to any one of claims 1 to 14, wherein said addition of a strengthening agent of SiC and/or C is produced in a quantity of from 5 to 60% by weight of SiC and/or C relative to the weight of the brazing solder composition.

16. Method according to any one of claims 1 to 15, wherein said addition of a strengthening agent of SiC and/or C is carried out by adding said strengthening agent of SiC and/or C to the brazing solder composition, prior to brazing, or by placing the strengthening agent close to and/or on, and/or between the pieces to be assembled.

17. Method according to any one of claims 1 to 16, wherein said strengthening agent of SiC and/or C is in the form of powder, grains, pieces, particles, fabric, non-woven fabric, a felt and a foam.

18. Method according to any one of claims 15 to 17, wherein said addition of SiC and/or C is carried out by mixing the SiC and/or C powder directly with the brazing solder composition.

19. Method according to any one of claims 15 to 17, wherein said addition of a strengthening agent of SiC and/or C is carried out by putting the SiC and/or C powder into suspension in an organic binder and by coating the pieces to be assembled with the obtained suspension.

20. Method according to any one of claims 15 to 17, wherein said addition of a strengthening agent of SiC and/or C is carried out by adding SiC and/or C particles to the brazing solder composition.

21. Method according to any one of claims 15 to 17, wherein said addition of a strengthening agent of SiC and/or C is carried out by inserting a fabric, a non-woven fabric, a felt or foam, of silicon carbide and/or carbon between the pieces to be assembled.

22. Method according to any one of claims 1 to 21, wherein the silicon carbide based materials are selected from the group consisting of silicon carbide sintered without pressure ("PLS-SiC"); Si infiltrated silicon carbide ("SiSiC" or "RBSC"); porous recrystallized silicon carbide ("RSiC"); graphite silicon ("C-SiC") constituted of graphite and coated with a layer of SiC; SiC/SiC composites; for example with fibres or "whiskers"; C/SiC composites, for example with fibres or "whiskers" of carbon and with SiC matrix, SiC single crystals; SiC composites with another ceramic, for example SiC/Si₃N₄ composites, and SiC/TiN.

23. Method according to any one of claims 1 to 22, wherein said silicon carbide based materials have a silicon carbide content greater than or equal to 80% by weight.

24. Composition for non reactive refractory brazing of pieces of silicon carbide based materials, comprising an addition of a SiC and/or C reinforcement or a non reactive brazing solder composition selected from the group consisting of:
- a brazing solder composition constituted, in atomic percentages, of from 40 to 97% silicon and of from 60 to 3% rhenium;
- a brazing solder composition constituted, in atomic percentages, of from 45 to 97% silicon and of from 55 to 3% ruthenium;
- a brazing solder composition constituted, in atomic percentages, of from 48 to 97% silicon and of from 52 to 3% iridium;
- a brazing solder composition constituted, in atomic percentages, of from 50 to 97% silicon and of from 50 to 3% palladium;
- a brazing solder composition constituted, in atomic percentages, of from 50 to 97% silicon and of from 50 to 3% platinum;
- a brazing solder composition constituted, in atomic percentages, of from 53 to 97% silicon and of from 47 to 3% cerium;
or a composition selected from the group consisting of the following compositions:
- a brazing solder composition constituted, in atomic percentages, of from 50 to 97% silicon and of from 50 to 3% chromium;
- a brazing solder composition constituted, in atomic percentages, of from 55 to 97% silicon and of from 45 to 3% vanadium;
- a brazing solder composition constituted, in atomic percentages, of from 60 to 97% silicon and of from 40 to 3% zirconium;
- a brazing solder composition constituted, in atomic percentages, of from 50 to 97% silicon and of from 50 to 3% rhodium;
- a brazing solder composition constituted, in atomic percentages, of from 58 to 97% silicon and of from 42 to 3% cobalt.

25. Refractory joint obtainable by the method according to any one of claims 1 to 23.

26. Assembly comprising at least two pieces of SiC based materials, obtainable by the method according to any one of claims 1 to 23.
